# EUROPÄISCHE PATENTSCHRIFT

(11) **EP 0 751 387 B1**
(45) Veröffentlichungstag und Bekanntmachung des Hinweises auf die Patenterteilung: **01.03.2000**
(21) Anmeldenummer: 96106237.9
(22) Anmeldetag: 20.04.1996
(51) Int. Cl.: G01M 17/04

(54) **Vorrichtung zur gleichartigen Prüfung mehrerer Luftfedern**
Device for similar testing of several air springs
Dispositif de test similaire de plusieurs amortisseurs pneumatiques

(30) Priorität: 27.06.1995 DE 19523310
(43) Veröffentlichungstag der Anmeldung: 02.01.1997
(73) Patentinhaber: Bayerische Motoren Werke Aktiengesellschaft, 80788 München (DE)
(72) Erfinder: Ram, Klaus, 82269 Geltendorf (DE)

(56) Entgegenhaltungen:
- DE-A- 2 454 594
- DE-A- 4 215 852
- FR-A- 2 292 966
- GB-A- 2 104 185
- US-A- 4 951 504
- US-A- 5 033 298

## Beschreibung

Die Erfindung bezieht sich auf eine Vorrichtung mit den Merkmalen des Oberbegriffs von Patentanspruch 1.

Eine derartige Vorrichtung ist aus der Veröffentlichung DVM-Tag 1994, Bauteil'94, Deutscher Verband für Materialforschung und -prüfung e.V. mit dem Titel: "Die Feder", S. 245/46 bekannt. Bei der bekannten sog. Lebensdauer-Prüfmaschine sind zwei Luftfedern hintereinander gehalten. Zwischen ihren benachbarten Enden verläuft ein Schwenkmechanismus, der eine komplementäre Verformung der beiden Luftfedern bewirkt. Zwar ist es dabei möglich, Versuchsparameter wie den Hebelarm des Schwenkmechanismus, seinen Druck, seine Amplitude, seine Frequenz und Überlagerungsfrequenz sowie die Versuchstemperatur oder auch einen Seitenversatz einzustellen. Sie bleiben während des Versuchs konstant (Einphasenversuch). Die Prüfung der Luftfedern geschieht dabei jedoch nicht betriebsbelastungsgerecht, da eine Simulation von tatsächlichen Fahrwerksverhältnissen und Fahrstrecken unter der realen Einbaugeometrie, der Temperatur und den Lastverhältnissen nicht berücksichtigt werden kann. Hierfür sind aufwendige servohydraulische Prüfmaschinen oder aber reproduzierbare Fahrversuche erforderlich, die zudem sehr lange bis zum Ausfall des Bauteils (Luftfeder) dauern.

Aus der DE 4215852 A ist eine Einrichtung zum Prüfen von Balgfedern unter betriebsähnlichen Belastungsbedingungen bekannt. Dabei wird eine Balgfeder an einem Ende eingespannt und am anderen Ende zwei überlagerten Bogenbewegungen unterworfen. Hierzu greifen zwei gelenkig gelagerte Schwenkhebel an diesem Ende der Balgfeder an. Abgesehen von der konstruktionsbedingten Kompliziertheit des mechanischen Aufbaus sind die Bewegungen in den orthogonalen Richtungen nicht exakt entkoppelt. Wesentlich ist ferner, daß mit dieser Einrichtung nur eine einzige Feder geprüft werden kann.

Ferner ist aus der US 4,951,504 A eine Vorrichtung zum Prüfen von Nutzfahrzeugachsen mit konventionellen Schraubenfedern bekannt. Zwar können dabei mehrere parallel zueinander angeordnete Federn einer überlagerten Bewegung in Längs- und Querrichtung unterworfen werden. Die Längsbewegung der Federn wird an einem Ende, die Querbewegung am anderen Ende vorgenommen. Auch hier sind die Bewegungen in den orthogonalen Richtungen konstruktionsbedingt nicht exakt voneinander entkoppelt.

Der Erfindung liegt die Aufgabe zugrunde, eine Vorrichtung der eingangs genannten Art zu schaffen, mit der eine betriebsbelastungsgerechte Prüfung mehrerer Luftfedem möglich ist.

Die Erfindung löst diese Aufgabe durch die kennzeichnenden Merkmale des Patentanspruchs 1.

Durch die Möglichkeit, eine von der Bewegung der Luftfedem in Längsrichtung unabhängige Querbewegung auszuführen, können die tatsächlichen Einbau- und Beanspruchsverhältnisse der Luftfedern nachgestellt werden. Entsprechend der Anwendung kann die Querbewegung während eines Prüfdurchgangs in ihrer Amplitude, Richtung und ihrem zeitlichen Verlauf variiert werden. Dadurch wird es auch möglich, die Prüfprogramme entsprechend der tatsächlichen Belastung auf definierten Teststrecken durchzuführen.

Die folgenden Ausführungen beschäftigen sich mit vereinfachten konstruktiven Ausgestaltungen der Erfindung, bei der bewußt auf die Möglichkeit einer in ihrem zeitlichen Verlauf frei wählbaren Querbewegung der Kolben verzichtet wird und dafür über eine vorgegebene Zahl von Lastspielen eine gleichförmige Belastung der Luftfedem erreicht wird. Diese mechanisch starren Ausführungsformen ermöglichen es andererseits mit einfachen Anpassungsmitteln die tatsächliche Belastung für eine vorgegebene Fahrwerksstruktur nachzufahren.

Hierzu sind in den Patentansprüchen 2 bis 4 einerseits und 5 bis 8 andererseits mögliche konstruktive Ausführungsformen zur Durchführung einer Querbewegung angegeben, die alternativ oder aber auch in Überlagerung anwendbar sind. Die erstgenannte Art der Querbewegung ist eine hin- und hergehende Linearbewegung in einer zur Längsrichtung der Luftfedern senkrechten Richtung. Die zweite Möglichkeit der Querbewegung ist eine Kippbewegung um eine quer zur Längsrichtung der Luftfedem verlaufende Achse.

In den Patentansprüchen 3 und 4 sowie 6 bis 8 sind konstruktiv vorteilhafte Ausführungsformen für das Erreichen der zugehörigen Querbewegung angegeben. Anstelle der angegebenen mechanischen Mitteln, diese Querbewegungen auszuführen, ist es selbstverständlich auch möglich, dies mit elektrischen oder hydraulischen Antrieben zu erreichen. Die angegebenen mechanischen Mitteln weisen demgegenüber konstruktive Vorteile bei geringem Herstellungs- und Betriebsaufwand aus.

Anhand der Zeichnung ist die Erfindung weiter erläutert. Es zeigt
- Fig. 1: eine Vorrichtung gemäß der Erfindung von der Seite
- Fig. 2: einen in Fig. 1 mit II bezeichneten Ausschnitt aus Fig.1 in vergrößerter Darstellung und
- Fig. 3: einen weiteren, mit III bezeichneten Ausschnitt aus Fig. 1 ebenfalls vergrößert und gegenüber Fig. 1 um 90° gedreht.

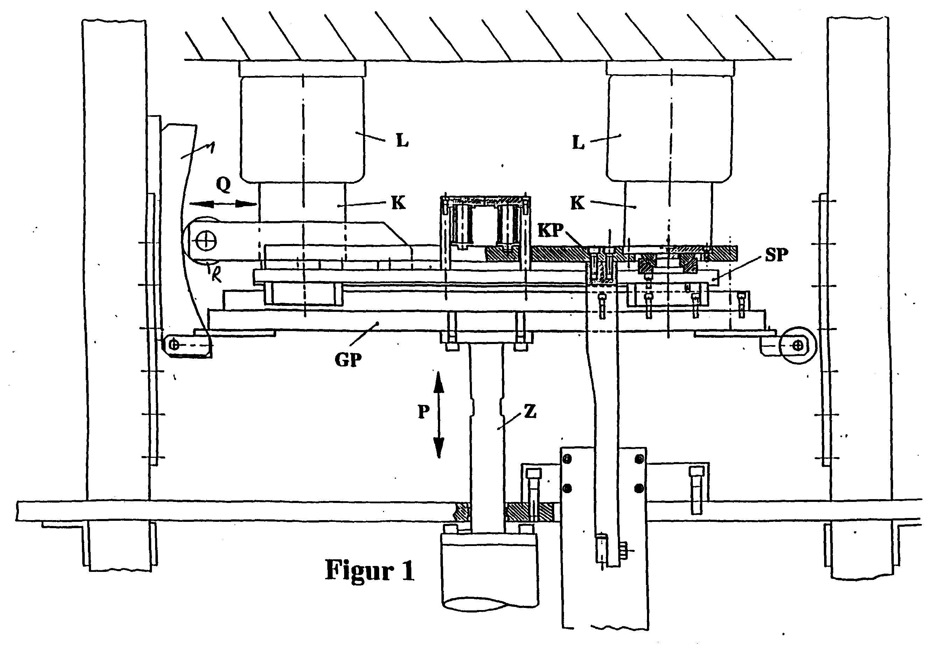

Die in Fig. 1 in ihren wesentlichen Elementen gezeigte Prüfeinrichtung dient dazu, vier parallel zueinander angeordnete Luftfedern unter realitätsnahen Bedingungen zu prüfen. Die Luftfedern L sind in Viereck angeordnet und mit ihrer Grundplatte GP starr befestigt. Ihre Kolben K sind auf einer Kippplatte KP befestigt. Die Kippplatte KP ist Bestandteil eines Tisches, der zusätzlich besteht aus einer Schwimmplatte SP und einer Grundplatte GP. Die Kippplatte ist gegenüber der Schwimmplatte SP kippbar und an dieser befestigt, während die Schwimmplatte SP ihrerseits gegenüber der Grundplatte GP querbeweglich gelagert ist.

Die Grundplatte GP ist in Längsrichtung, durch einen Pfeil P angegebene Richtung harmonisch oder aber auch stochastisch bzw. entsprechend einem definierten Ablauf in ihrer Höhe, d.h. dem Festlager eines Hydraulikzylinders Z in ihrer Höhe verstellbar. Die Schwimmplatte SP besitzt eine Kulissensteuerung und ist damit in Richtung eines weiteren Pfeils Q hin und her und senkrecht zur Richtung des Pfeils P beweglich.

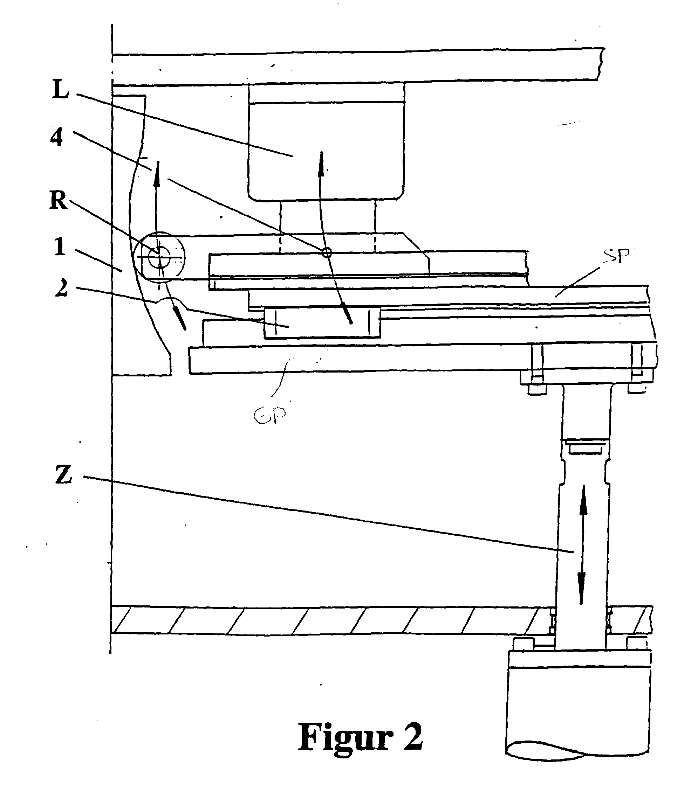

Der Bewegungsmechanismus für die Schwimmplatte SP ergibt sich aus Fig. 2. Die Schwimmplatte SP ist mit der Grundplatte GP mit einer Linearführung 2 verbunden. Die Kulissensteuerung besteht aus einer Kulisse 1, auf der das seitliche Ende der Schwimmplatte SP über ein Rad R abrollt, wenn die Grundplatte GP und damit die Schwimmplatte SP durch den Hydraulikzylinder Z in ihrer Höhe verstellt werden.

Die Bewegung, die durch die Luftfedern L ausgeführt wird, entspricht der Bewegung der Luftfedem L um die (nicht dargestellten) Querlenker eines ebenfalls nicht gezeigten Fahrzeugs, wenn über den Zylinder Z der koaxiale Federweg der Luftfedem L eingespeist wird.

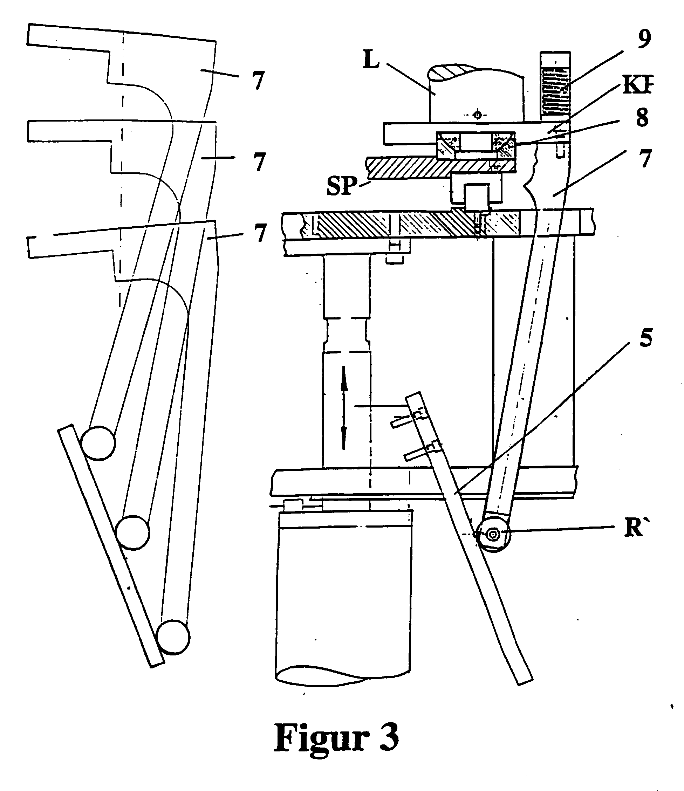

Dieser im wesentlichen axialen Bewegung der Luftfedern L ist eine Kippbewegung überlagert, die durch den in Fig. 3 im einzelnen dargestellten Kippmechanismus bewirkt wird. Dieser Kippmechanismus ist zum besseren Verständnis um 90° gegenüber der Darstellung von Fig. 1 gedreht.

Dieser Kippmechanismus bildet die Kippbewegung des Radträgers (nicht gezeigt) im Fahrzeug nach. Hierzu ist eine zweite Kulisse 5 vorgesehen, die über eine schräge Fläche bei der Vertikalbewegung der Grundplatte, der Schwimmplatte, sowie der darauf angeordneten Kippplatte abläuft. Ein Hebelarm 7 ist mit der Kippplatte KP verbunden. Die Kippplatte ist kippbar auf der Schwimmplatte SP gelagert. Hierzu ist an den Befestigungsstellen der Luftfedem L jeweils ein Gelenklager 8 angeordnet. Die Kippplatte KP schwenkt bei der Einleitung des koaxialen Federweges über den Servohydraulikzylinder Z um den theoretischen Mittelpunkt. Die Bewegung der Kippplatte KP ist im linken Teil von Fig. 3 abgebildet. Die Ausrichtung und Ausgestaltung des Hebelarms 7 ist dabei so getroffen, daß in der im rechten Teil von Fig. 3 gezeigten Mittellage des Hebelarms 7 die Kippplatte KP waagrecht liegt, während sie bei ihrer Lage darüber bzw. darunter nach oben bzw. nach unten um jeweils denselben Kippwinkel geschwenkt ist. Eine Feder 9 verhindert bei dieser Schwenkbewegung ein Abheben der am Ende des Hebelarms 7 angeordneten Rolle R' von der Kulisse 5.

Durch die beiden unabhängig voneinander arbeitenden Kulissen wird es möglich, einer Vertikalbewegung der Kolben K zwei Querbewegungen zu überlagern, die eine Linearverschiebung quer zur Bewegungsrichtung des Zylinders Z (Fig. 2) und eine Kippbewegung um eine parallel zur Achse der Linearbewegung verlaufende Kippachse ausführen. Durch Variation der Form und Neigung der Kulissen wird es dabei möglich, entsprechend den tatsächlichen Einbau- und Beanspruchsverhältnissen eine realitätsnahe Prüfung von insgesamt hier vier Luftfedem durchzuführen.

## Patentansprüche

1. Vorrichtung zur gleichartigen Prüfung mehrerer Luftfedern (L), die an ihrer Endplatte eingespannt und an ihrem Kolben einer variablen Prüfbelastung unterworfen sind, dadurch gekennzeichnet daß die Luftfedern (L) parallel zueinander angeordnet sind, und daß zum Erzeugen einer überlagerten Bewegung die Kolben (K) an einer Schwimmplatte (SP) und diese wiederum an einer Grundplatte (GP) befestigt sind, wobei die Grundplatte (GP) und die Schwimmplatte (SP) so angeordnet sind, daß bei der Prüfung die Grundplatte eine in Längsrichtung der Luftfedern (L) verlaufende Längsbewegung und die Schwimmplatte eine quer dazu verlaufenden Querbewegung ausführen kann.

2. Vorrichtung nach Anspruch 1, dadurch gekennzeichnet, daß die Querbewegung eine hin- und hergehende Linearbewegung längs einer quer zur Längsrichtung der Luftfedern (L) verlaufende Achse ist.

3. Vorrichtung nach Anspruch 2, dadurch gekennzeichnet, daß die Schwimmplatte (SP) parallel zu einer Grundplatte (GP) an dieser gehalten und ihr gegenüber linear geführt ist.

4. Vorrichtung nach Anspruch 3, dadurch gekennzeichnet, daß die Schwimmplatte durch eine Kulissensteuerung (1/R) relativ zur Grundplatte (GP) ausgelenkbar ist.

5. Vorrichtung nach einem der Ansprüche 1 bis 4, dadurch gekennzeichnet, daß die Querbewegung eine Kippbewegung um eine quer zur Längsrichtung der Luftfedern (L) verlaufende Achse ist.

6. Vorrichtung nach Anspruch 5, dadurch gekennzeichnet, daß die Kippbewegung durch einen Kipptisch (KP) verursacht ist, an dem die Kolben (K) gehalten sind und der kippbar gegenüber der Schwimmplatte (SP) ist, wobei die Schwimmplatte (SP) gegenüber der Grundplatte (GP) querbeweglich gelagert ist.

7. Vorrichtung nach Anspruch 6, dadurch gekennzeichnet, daß die Kippplatte durch einen Schwenkhebel bewegbar ist.

8. Vorrichtung nach Anspruch 7, dadurch gekennzeichnet, daß der Schwenkhebel auf einer Kulisse führbar ist.

## Claims

1. A device for uniformly testing a number of pneumatic springs (L) which are clamped at their end plates and subjected to a variable test load on their pistons, characterised in that the pneumatic springs (L) are disposed parallel to one another and in order to generate a superposed motion the pistons (K) are fastened to a floating plate (SP) which is fastened to a baseplate (GP), the baseplate (GP) and the floating plate (SP) being disposed so that during the test the baseplate can move longitudinally in the longitudinal direction of the pneumatic springs (L) and the floating plate can move transversely thereto.

2. A device according to claim 1, characterised in that the transverse motion is a reciprocating linear motion along an axis extending transversely to the longitudinal direction of the pneumatic springs (L).

3. A device according to claim 2, characterised in that the floating plate (SP) is held parallel to and against the baseplate (GP) and is guided in linear manner relative to it.

4. A device according to claim 3, characterised in that the floating plate is pivotable relative to the baseplate (GP) by a link motion (1/R).

5. A device according to any of claims 1 to 4, characterised in that the transverse motion is a tilting motion around an axis extending transversely to the longitudinal direction of the pneumatic springs (L).

6. A device according to claim 5, characterised in that the tilting motion is caused by a tilting table (KP) against which the piston (K) is held and which is tiltably mounted relative to the floating plate (SP), the floating plate (SP) being mounted so as to be transversely movable relative to the baseplate (GP).

7. A device according to claim 6, characterised in that the tilting plate is movable by a rocking lever.

8. A device according to claim 7, characterised in that the rocking lever is guidable on a link.

## Revendications

1. Dispositif de test similaire de plusieurs amortisseurs pneumatiques (L) montés serrés sur leur plaque d'extrémité et soumis à une sollicitation d'essai variable au niveau de leurs pistons,
caractérisé en ce que
les amortisseurs pneumatiques (L) sont disposés parallèlement les uns aux autres et en ce que, pour générer un mouvement superposé, les pistons (K) sont fixés sur une plaque flottante (SP) et celles-ci de nouveau sont fixées sur une plaque de base (GP), la plaque de base (GP) et la plaque flottante (SP) étant disposées de manière que, lors de l'essai, la plaque de base peut effectuer un mouvement longitudinal, s'étendant dans la direction longitudinale des amortisseurs pneumatiques (L), et la plaque flottante peut effectuer un mouvement transversal, s'étendant transversalement à celui-ci.

2. Dispositif selon la revendication 1,
caractérisé en ce que
le mouvement transversal est un mouvement linéaire de va et vient, effectué le long d'un axe s'étendant transversalement par rapport à la direction longitudinale des amortisseurs pneumatiques (L).

3. Dispositif selon la revendication 2,
caractérisé en ce que
la plaque flottante (SP) est maintenue, parallèlement à une plaque de base (GP), sur celle-ci et est guidée de façon linéaire par rapport à elle.

4. Dispositif selon la revendication 3,
caractérisé en ce que
la plaque flottante est articulée inclinable par rapport à la plaque de base (GP) au moyen d'une commande à coulisse (1/R).

5. Dispositif selon l'une des revendications 1 à 4,
caractérisé en ce que
le mouvement transversal est un mouvement de basculement autour d'un axe s'étendant transversalement par rapport à la direction longitudinale des amortisseurs pneumatiques.

6. Dispositif selon la revendication 5,
caractérisé en ce que
le mouvement de basculement est provoqué par une table basculante (KP) sur laquelle les pistons (K) sont fixés et qui est susceptible de basculer par rapport à la plaque flottante (SP), la plaque flottante (SP) étant montée avec une mobilité transversale par rapport à la plaque de base (GP).

7. Dispositif selon la revendication 6,
caractérisé en ce que
la plaque basculante est mobile.

8. Dispositif selon la revendication 7,
caractérisé en ce que
le levier de pivotement est susceptible d'être guidé sur une coulisse.
